# EUROPÄISCHE PATENTSCHRIFT

(11) **EP 2 429 674 B1**
(45) Veröffentlichungstag und Bekanntmachung des Hinweises auf die Patenterteilung: **23.12.2015**
(21) Anmeldenummer: 10720568.4
(22) Anmeldetag: 30.04.2010
(51) Int. Cl.: B01D 11/02, B01D 11/04, C02F 11/00, C05B 15/00, C05F 7/00

(54) **PHOSPHATGEWINNUNG AUS KLÄRSCHLAMM**
PHOSPHATE RECOVERY FROM SLUDGE
RECUPERATION DE PHOSPHATE DE BOUES D'EPURATION

(30) Priorität: 11.05.2009 DE 102009020745
(43) Veröffentlichungstag der Anmeldung: 21.03.2012
(73) Patentinhaber: Chemische Fabrik Budenheim KG, 55257 Budenheim (DE)
(72) Erfinder: WISSEMBORSKI, Rüdiger, 55435 Gau-Algesheim (DE); SCHNEE, Rainer, 55130 Mainz (DE); WALLWITZ, Rainer, 65527 Niedernhausen (DE); KÜMMET, David, 55257 Budenheim (DE)
(74) Vertreter: WSL Patentanwälte Partnerschaft mbB
(86) Internationale Anmeldenummer: PCT/EP2010/055936
(87) Internationale Veröffentlichungsnummer: WO 2010/130589

(56) Entgegenhaltungen:
- CH-A5- 633 498
- DE-B- 1 060 549
- JP-A- 57 111 215
- US-B1- 6 966 941

## Beschreibung

Die vorliegende Erfindung betrifft die Gewinnung von Wertstoffen, insbesondere Phosphat, aus Klärschlammprodukten, nämlich Klärschlamm, Klärschlammasche oder Klärschlammschlacke, durch Extraktion.

### Hintergrund der Erfindung

Klärschlamm aus der Abwasserbehandlung stellt sowohl eine Schadstoffsenke als auch einen Speicher für Nährstoffe, wie Stickstoff, Phosphor und Kalium, dar. Es gibt daher vielfältige Bestrebungen und Verfahren zur Klärschlammnutzung als wertvolle Quelle für Rohstoffe ("Sekundärrohstoffe"). Beispielsweise gibt es eine Reihe von Verfahren zur Aufbereitung von Klärschlamm, um diesen landwirtschaftlich als Phosphatdünger in den Kreislauf zurückführen zu können. Andererseits wird Klärschlamm wegen seiner hohen Schmermetall- und Giftstoffbelastung als Dünger auch kritisch betrachtet und sogar als Sonderabfall behandelt. In einigen Ländern wurde die landwirtschaftliche Klärschlammverwertung daher bereits eingeschränkt oder gänzlich gestoppt.

Die DE 1 060 549 beschreibet ein Verfahren zur Gewinnung von Vitamin B12 aus Klärschlamm, bei man dem Klärschlamm einer Behandlung mit Kalziumhydroxid in Gegenwart von Wasser unterwirft, unlösliche Bestandteile abfiltriert und das Filtrat als Ausgangssubstanz für die Gewinnung von Vitamin B12 einsetzt.

Vor diesem Hintergrund kommt der Rückgewinnung von Wertstoffen aus dem Klärschlamm gegenüber der reinen Klärschlammaufbereitung und -entgiftung zur weiteren Nutzung eine immer größere Bedeutung zu. Dies betrifft insbesondere den Wertstoff Phosphor, für den weltweit ein hoher Bedarf bei gleichzeitig begrenzter Verfügbarkeit besteht. Phosphat wird überwiegend in den USA, China, Marokko und Russland abgebaut. Es gibt Schätzungen, dass die mit vertretbarem Aufwand abbaubaren Phosphorreserven nur noch für 60 bis 130 Jahre ausreichen. Dabei ist zu beachten, dass es zunehmend schwieriger und auch teurer wird, qualitativ hochwertige, nur gering mit Schwermetallen verunreinigte Phosphorerze zu erschließen.

Vor dem Hintergrund der begrenzten weltweiten Reserven an Phosphor, auf die mit den heutigen Abbaubedingungen zurückgegriffen werden kann, sowie des Preisanstiegs von Rohphosphaten und der Prognosen über einen unter Berücksichtigung des Bevölkerungswachstums und zukünftige Ernährungsgewohnheiten steigenden Verbrauch werden zunehmend neue Maßnahmen der

Gewinnung und Rückgewinnung von Phosphor aus anderen Quellen, wie beispielsweise aus dem Wasser oder Klärschlamm bzw. Klärschlammasche, diskutiert.

Bei der Monoverbrennung von Klärschlamm bleibt Phosphor als Rückstand in der Asche. Je nach Betriebsweise der Kläranlage beträgt die Konzentration zwischen 4 bis 8 Gew.-% P, bzw. 10 bis 22 Gew.-% Phosphorpentoxid (P₂O₅). Weitere Hauptkomponenten der Klärschlammasche sind SiO₂ (30-50 %), CaO (ca. 10-20 %) sowie Al₂O₃ und Fe₂O₃.

Calcium wird überwiegend mit der Wasserhärte eingetragen. Das Siliziumoxid stammt aus den eingetragenen Feststoffen, wie Sand, Split etc.. Aluminiumverbindungen werden zum Teil über die im Waschmittel enthaltenen wasserenthärtenden Zeolithe eingetragen.

Daneben enthält die Klärschlammasche Schwermetalle, u.a. Cr (50ppm), Cu (350 ppm), Ni (30 ppm), Pb (10,0ppm), Cd (1,3ppm), Hg (1,45 ppm). Organische Schadstoffe werden durch die Verbrennung des Klärschlamms in der Regel restlos zerstört, und Keime sowie geruchsbildende Stoffe werden durch die Verbrennung eliminiert.

Für die Nutzung bzw. Gewinnung von Phosphor aus der Asche von Mono-Klärschlammverbrennungen sind verschiedene Ansätze im Stand der Technik bekannt.

### 1. Direkte Aufbringung der Asche auf landwirtschaftliche Flächen

Dies dürfte nur dann akzeptabel sein, wenn die Schwermetallgehalte sehr niedrig sind und nachgewiesen werden kann, dass der Phosphor in einer pflanzenverfügbaren Form vorliegt.

### 2. Die direkte Aufarbeitung der Asche in der Düngemittelindustrie

Auch dieser Weg dürfte nur bei geringer Schwermetallverunreinigung gangbar sein, da sowohl etliche Schwermetalle als auch Eisenverbindungen bei den in der Phosphorerzaufbereitung eingesetzten Verfahren stören.

### 3. Auswaschen der Phosphate mit heißem Wasser und anschließende Fällung oder Kristallisation

Eine derartige Phosphat-Rückgewinnung scheint nach derzeitigem Kenntnisstand nur bei unmittelbarer Veraschung des Überschussschlamms aus der vermehrten biologischen P-Elimination (Bio-P-Verfahren) möglich zu sein. Nur unter dieser Voraussetzung kann es gelingen, den im Überschussschlamm in Form von Polyphosphat gebundenen Phosphor auch nach der Veraschung des Schlammes in wasserlöslicher Form wiederzufinden. Laborversuche zeigten die prinzipielle Anwendbarkeit der Methode. Allerdings ist auf diesem Wege nur der Polyphosphatanteil, der bei heutigen Verhältnissen selten mehr als 40 % der Rohphosphatfracht ausmacht, rückgewinnbar. Hinzu kommt, dass es bei der in Deutschland üblichen Stabilisierung der Schlämme durch Faulung zu einer Umlagerung des Polyphosphats in eine chemisch-physikalische Bindungsform kommt, die nach der Veraschung eine Extraktion mit Wasser kaum möglich erscheinen lässt.

### 4. Eluierung der Phosphate aus der Asche mit Schwefelsäure

Dieses Verfahren wird von der dänischen Firma PM Energi / BioCon A/S angeboten. Beim BioCon-Verfahren werden die Phosphate aus der Asche mit Schwefelsäure aufgeschlossen und eluiert. Neben den Phosphaten werden auch Eisen- und Aluminiumverbindungen sowie Kalium extrahiert. "Nichtflüchtige Schwermetalle" bleiben hingegen im Aschereststoff. Mit Hilfe einer Batterie von verschiedenartigen Ionenaustauschern wird Phosphor als Phosphorsäure rückgewonnen. Die gleichzeitig eluierten Schwermetalle fallen als eigene Fraktion in konzentrierter Form an. Das Sulfat wird als Kaliumhydrogensulfat rückgewonnen. Der Chemikalienbedarf steigt mit dem Fällmittelgehalt linear an, weshalb der Einsatz von Fe- oder Al-Fällmitteln auf das notwendige Minimum reduziert werden soll.

### 5. Krepro-Prozess

Beim Krepro-Prozess, einem von Kemira Kemwater, Alpha Laval und der Kläranlage Helsingborg entwickelten mehrstufigen Prozess, wird der Klärschlamm in verschiedene Produkte separiert. Phosphor fällt dabei als Eisenphosphat an. In der ersten Stufe wird der Schlamm nach Zugabe von Schwefelsäure bei einem pH-Wert von 1,5 und einem Druck von ca. 4 bar bis auf ca. 150°C erhitzt und hydrolysiert. Dabei geht ein hoher Anteil der organischen Substanz in Lösung. Der ungelöste Anteil wird anschließend in einer Zentrifuge auf 45 % Trockensubstanz entwässert und ausgeschleust. Das Zentrifugat enthält laut Prozessbeschreibung die gelösten organischen Substanzen, den gelösten Phosphor, die Fällmittel sowie die rückgelösten Schwermetalle, sofern diese nicht am Schlamm gebunden vorliegen. Nach Zugabe von Eisen und stufenweiser Anhebung des pH-Wertes auf ca. 8,5 bis 9 fällt Eisenphosphat (FePO₄) aus, welches wiederum durch Zentrifugation von der flüssigen Phase abgetrennt, auf ca. 35 % Trockensubstanz eingedickt und als Produkt ausgeschleust wird. In einem weiteren Schritt können nach erneuter Anhebung des pH-Wertes die Schwermetalle - separat vom Eisenphosphat - abgetrennt werden. Zurück bleibt ein Zentrifugat, aus welchem noch das Fällmittel Eisenhydroxid rückgewonnen wird, bevor es ggf. als Kohlenstoffquelle genutzt werden kann bzw. in der Kläranlage behandelt werden muss. Der Prozess wird in zwei Varianten, als kontinuierliches bzw. als ansatzweise betriebenes Verfahren angeboten. Der spezifische Schwermetallgehalt, d.h. der auf Phosphor bezogene Schwermetallgehalt des erzeugten Eisenphosphats, soll nur bei einem Bruchteil des Wertes von unbehandeltem Schlamm und in ähnlicher Größenordnung wie bei Mineraldüngern liegen. Der Energieverbrauch ist hoch. Der Prozess kommt jedoch ohne Fremdenergie aus, wenn der Schlamm verbrannt und zur Energieproduktion verwendet wird. Die Phosphor-Rückgewinnung liegt bei ca. 75 % der mit dem Schlamm eingetragenen Menge.

### 6. Seaborne Verfahren

Das Seaborne Verfahren sieht eine Mitbehandlung von Klärschlamm in Biogasanlagen zur Gülleverarbeitung vor. Es wurde von der Seaborne Environmental Research Laboratory entwickelt und soll aus diversen Biomassen die Produkte Dünger und Methangas in einer reinen, gut nutzbaren Qualität produzieren. Als Nebenprodukte fallen Schwermetallsulfide in konzentrierter Form und Abwasser an. In dem Verfahren wird Biomasse je nach Schwermetallbelastung entweder direkt oder nach der Schwermetallfällung mit H₂S-haltigem Biogas im Fermenter ausgefault. In einem Separator wird die ausgefaulte Biomasse entwässert. Der Feststoff wird verbrannt, und die flüssige Phase wird zunächst einer Schwermetallfällung (RoHM = Removal of Heavy Metals) zugeführt. Anschließend werden aus ihr die Nährstoffe Stickstoff, Phosphor und Kalium durch verschiedene chemische Fällungsreaktionen in den sogenannten NRS-Reaktoren (NRS = Nitrogen Recycling System) ausgefällt. In den RoHM-Reaktoren wird das im Biogas enthaltene H₂S abgereichert und zur Schwermetallfällung genutzt. Das vorgereinigte Biogas wird in dem als RGU (Regenerative Gas Upgrading) bezeichneten Gaswäscher vom CO₂ befreit, so dass nahezu reines Methan (CH₄ > 98 %) als Produkt anfällt. Das im Biogas enthaltene CO₂ wird als Carbonat zur Fällung der Nährstoffe in den NRS-Reaktoren eingesetzt. Da auch die Verbrennungsasche wieder via RoHM in den Fermenter zurückgeführt wird, entsteht anscheinend kein fester Abfall bis auf die Schwermetallsalze, die in der Galvanotechnik verwendet werden können.

### 7. Phostrip-Prozess

Das Phostrip-Verfahren ist nur bedingt mit den oben beschriebenen Prozessen vergleichbar. Zwar wird auch hier Phosphor aus dem Schlamm zurückgewonnen, jedoch nur so viel, wie bei der vermehrten biologischen P-Elimination zusätzlich aufgenommen wurde ("luxury uptake"). Der abgezogene Überschussschlamm enthält die gleiche P-Konzentration wie bei konventionellen Verfahren, so dass die Rückgewinnung auf ca. 33 bis 50% des zugeführten Schlamms beschränkt bleibt. Der Phostrip-Prozess ist als eine verfahrenstechnische Variante der Bio-P-Verfahren zu betrachten, bei dem die Rücklösung des Phosphats im Nebenstrom erfolgt. Ein Teil des Rücklaufschlamms wird zunächst dem Vorstripper zugeführt und dort mit organischem Substrat aus dem Zulauf oder dem Bodenablauf des Strippers versetzt, um unter anoxischen Bedingungen das im Schlammwasser enthaltene Nitrat zu denitrifizieren. Im Stripper genannten Rücklösebecken dickt der Schlamm unter anaeroben Bedingungen ein. Der Biomasse wird dabei das in der Zelle gespeicherte Phosphat teilweise entzogen (engl. to strip) und in die Wasserphase ausgeschieden. Der an Phosphat verarmte Schlamm wird wieder der Belebung zugeführt und kann unter aeroben Bedingungen erneut Phosphat aufnehmen und speichern. Der orthophosphathaltige Überstand wird abgezogen. In einem Fällungsreaktor wird Phosphat mit Kalkmilch oder einem anderen Fällmittel bei pH-Werten oberhalb 8,5 gefällt und anschließend abgeschieden. Das Verfahren wurde in den beiden Kläranlagen in Darmstadt (DE) installiert, zeitweise jedoch wegen Problemen stillgelegt. Es wird berichtet, dass das ausgefällte Calciumphosphat nahezu frei von organischen Beimengungen sei und P₂O₅-Gehalte von 33 bis 41 % in der Trockenmasse erreicht werden. Dennoch wurde aus Praktikabilitätsgründen als Fällmittel überwiegend eine Natriumaluminatlösung verwendet, was die Nutzung des Phosphats stark einschränkt. Die Schwermetallgehalte und AOX-Konzentrationen (AOX = absorbierbare organisch gebundene Halogene) im Fällschlamm sollen sehr gering sein (10 % des Grenzwerts der Klärschlammverordnung für Cu, Zn und AOX und noch niedriger für Cd, Cr, Hg, Ni und Pb). Das Verfahren zeigte jedoch Probleme bei der Steuerung des Prozesses. Bei unzureichender Verweilzeit des Schlamms im Stripper war die P-Rücklösung ungenügend, bei ausreichend langer Verweilzeit zur Bildung der organischen Säuren und ausreichender P-Rücklösung kam es zu starker Schwefelwasserstoffbildung einerseits und andererseits zur Schädigung des Schlamms. Zudem wird ein Zusammenhang zwischen dem Anteil an fädigen Mikroorganismen im Belebtschlamm und dem Betrieb der Phostrip-Anlage vermutet.

### 8. Ashdec-Verfahren

Um Klärschlammasche nutzen zu können, wurde in den vergangenen Jahren unter anderem in dem EU-Projekt "SUSAN" ein Verfahren entwickelt, durch das die Schwermetalle, beispielsweise Pb, Cu, Cd, Zn, etc., aus der Asche entfernt werden. Die Firma Ash Dec - der Name steht für "Dekontamination" von Asche - hat eine derartige Pilot-Anlage bereits in Leoben, Österreich, in Betrieb. Der Prozess nutzt die Flüchtigkeit von Metallchloriden. Die Klärschlammasche wird mit umweltverträglichen Metallchloriden, in der Regel CaCl₂, vermischt, zu einem Granulat kompaktiert und in einem Drehrohrofen über den Siedepunkt der sich bildenden Schwermetallchloride auf 900 bis 1100 Grad erhitzt. Die Metallchloride verdampfen dabei und werden aus der Gasphase durch Rauchgaswäscher abgetrennt. Mit diesem Prozess werden zwei Produkte erhalten, eine als Phosphor-Dünger geeignete Klärschlammasche, deren Schwermetallgehalt um mehr als 90 % gegenüber dem ursprünglichen Gehalt vermindert ist, und als weiteres Produkt einen Rückstand mit hoher Metall-Konzentration, der in Zukunft ebenfalls auch wirtschaftlich verwertet werden könnte. Vor allem Aluminium, Eisen, Edelstahl oder Kupfer können aus dem Rückstand gewonnen werden.

### Aufgabe der Erfindung

Die Aufgabe der vorliegenden Erfindung bestand in der Bereitstellung eines wirtschaftlichen Verfahrens zur selektiven Abtrennung bzw. Rückgewinnung von Wertstoffen, insbesondere Phosphor, aber ggf. auch Metallen und Nichtmetallen, aus Klärschlamm oder Klärschlammasche.

### Beschreibung der Erfindung

Gelöst wird die erfindungsgemäße Aufgabe durch ein Verfahren zur Gewinnung von Phosphat aus Klärschlammprodukten, nämlich Klärschlamm, Klärschlammasche oder Klärschlammschlacke, durch Extraktion, bei dem man
eine Suspension des Klärschlammproduktes in Wasser, Alkohol, Wasser/Alkohol-Gemisch oder wässriger Lösung herstellt,
gasförmiges Kohlendioxid (CO₂) oder überkritisches Kohlendioxid (scCO₂) als Extraktionsmittel in die Suspension des Klärschlammproduktes einleitet,
ungelöste Feststoffe von dem flüssigen Suspendiermittel abtrennt,
Kohlendioxid aus dem Suspendiermittel entfernt und
in dem Suspendiermittel gelöste Phosphate ausfällt und von dem Suspendiermittel abtrennt.

Durch das Verfahren werden die Wertstoffe, wie Calcium und Phosphat, aus den Systemen gewonnen und können einer Verwertung zugeführt werden. Die Reststoffe werden zweckmäßigerweise konzentriert und ebenfalls einer weiteren Verwertung oder einer Entsorgung zugeführt.

Durch geeignete Dosierung und Arbeiten mit einem Lösungsmittelüberschuss können hohe Mengen an Phosphat gelöst werden. Beispielsweise können bei einem Einsatz von etwa 5 Gramm Klärschlammasche in einem Liter Extraktionsmittel Mengen von über 30 Gew.-% Phosphat gelöst werden. Da die Aufnahmefähigkeit der Lösung für Phosphate beschränkt ist, können bei höheren Konzentrationen an Klärschlammasche in Extraktionsmittel kaum höhere Anteile an Phosphat extrahiert werden.

In einer bevorzugten Ausführungsform der Erfindung enthält das Suspendiermittel zur Herstellung der Suspension des Klärschlammproduktes einen oder mehrere Alkohole in einer Menge von 0,1 bis 50 Gew.-%, vorzugsweise 1 bis 10 Gew.-%, besonders bevorzugt 1 bis 5 Gew.-%, bezogen auf die Menge an flüssigem Suspendiermittel, wobei der eine Alkohol oder die mehreren Alkohole vorzugsweise ausgewählt ist/sind unter Methanol, Ethanol und Isopropanol. Generell können alle Alkohole zum Einsatz kommen. Besonders bevorzugt handelt es sich bei dem Suspendiermittel um Wasser oder eine wässrige Lösung.

In einer weiteren bevorzugten Ausführungsform der Erfindung enthält das Suspendiermittel zur Herstellung der Suspension des Klärschlammproduktes weiterhin eine oder mehrere Säuren in einer Menge von 0,001 bis 80 Gew.-%, vorzugsweise 0,01 bis 30 Gew.-%, besonders bevorzugt 0,1 bis 10 Gew.-%, bezogen auf die Menge an flüssigem Suspendiermittel, wobei die eine Säure oder die mehreren Säuren vorzugsweise ausgewählt ist/sind unter organischen Mono- und Dicarbonsäuren und Mineralsäuren, vorzugsweise HCl und H₂SO₄. Durch die Säurezugabe wird die Löslichkeit der zu gewinnenden Wertstoffe, insbesondere von Calcium und Phosphat, verbessert.

In einer weiteren bevorzugten Ausführungsform der Erfindung enthält die Suspension das Klärschlammprodukt bei der Herstellung der Suspension in einer Menge von 0,1 bis 60 Gew.-%, bezogen auf die Menge an flüssigem Suspendiermittel.

In einer weiteren bevorzugten Ausführungsform der Erfindung leitet man gasförmiges Kohlendioxid (CO₂) als Extraktionsmittel in die Suspension des Klärschlammproduktes ein.

In einer weiteren bevorzugten Ausführungsform der Erfindung leitet man das Kohlendioxid als Extraktionsmittel bei einem Druck von 0,1 bis 200 bar, vorzugsweise von 1 bis 100 bar, besonders bevorzugt von 5 bis 10 bar in die wässrige Suspension des Klärschlammproduktes ein. Bei einem zu niedrigen Druck werden keine nennenswerten Mengen an Phosphat gelöst. Erst ab einem Druck von 0,1 bar kommt es zu einem Lösung von signifikanten Mengen des in der Klärschlammasche bzw. im Klärschlamm enthaltenen Phosphates. Bei Drücken über 200 bar werden im Vergleich zu niedrigeren Drücken keine signifikant höheren Mengen an Phosphaten herausgelöst.

In einer weiteren bevorzugten Ausführungsform der Erfindung weist die Suspension beim Einleiten des das Kohlendioxids als Extraktionsmittel eine Temperatur im Bereich von -20 bis +200 °C, vorzugsweise von 0 bis +100 °C, besonders bevorzugt von +20 bis +50 °C auf.

In einer weiteren bevorzugten Ausführungsform der Erfindung wird das Abtrennen ungelöster Feststoffe von dem flüssigen Suspendiermittel mittels Filtration, Sedimientation oder Zentrifugation durchgeführt.

In einer weiteren bevorzugten Ausführungsform der Erfindung erfolgt das Entfernen von Kohlendioxid aus dem Suspendiermittel durch Reduzierung des Drucks und/oder Temperaturerhöhung und/oder Fällung, wie beispielsweise mit Ca(OH)₂, und/oder Ultraschallbehandlung und/oder Mikrowellenbehandlung und/oder mechanische Gasextraktionshilfsmittel.

In einer weiteren bevorzugten Ausführungsform der Erfindung erfolgt das Entfernen von Kohlendioxid aus dem Suspendiermittel und das Ausfällen und Abtrennen von Wertstoffen fraktioniert in aufeinanderfolgenden Stufen.

In einer weiteren bevorzugten Ausführungsform der Erfindung werden zum Ausfällen von Phosphaten aus dem Suspendiermittel zusätzlich Fällmittel zugegeben, vorzugsweise Alkali- oder Erdalkaliverbindungen, bevorzugt Alkali- oder Erdalkalihydroxide, besonders bevorzugt Calcium-hydroxid.

Es wurde gefunden, dass die Nachteile des Standes der Technik durch ein Extraktionsverfahren mit CO₂ überwunden werden können. Grundbestandteile für die Extraktion sind dabei lediglich ein Suspendiermittel, das Wasser und/oder Alkohol enthält, und Kohlensäure, eingebracht in der Form von gasförmigem oder überkritischem Kohlendioxid. Dabei wird auf ein energieaufwendiges thermisches Verfahren verzichtet. Lediglich das Trocknen der Rückstände erfordert einen höheren Energieeintrag.

Bei dem erfindungsgemäßen Extraktionsverfahren kann in einem breiten Temperaturbereich gearbeitet werden, wobei Temperaturen +20 bis 50°C besonders bevorzugt sind. Dabei werden einzelne Komponenten der Klärschlammprodukte mittels Kohlensäure gelöst und vom Rest abgetrennt. Das Filtrat mit den gelösten Bestandteilen wird dann gezielt von Kohlensäure befreit. Dies erfolgt vorzugsweise fraktioniert in aufeinanderfolgenden Stufen, so dass die einzelnen Fraktionen separiert und einer sachgemäßen Verwendung zugeführt werden können. Beispielsweise können phosphatreiche Fraktionen als Bestandteile in Düngemitteln eingesetzt werden. Die Eisen und andere Schwermetalle enthaltenden Fraktionen können als Rohstoff verwertet werden.

### Beispiele

Die in den Beispielen eingesetzte Klärschlammasche stammt aus einer industriellen Klärschlammverbrennungsanlage, die auch kommunalen Klärschlamm einsetzt.

### Beispiel 1

900 ml Wasser werden mit 5g Klärschlammasche versetzt, mit Kohlensäure in einem Sprudler begast und dann bei einem Druck von 6 bar bei 22°C für 20 min gerührt. Danach werden die festen von Bestandteile vom Filtrat getrennt. Das Filtrat wird dann auf 40°C erhitzt und es werden 100g Wasser unter Vakuum abdestilliert. Sobald eine Ausfällung einsetzt wird diese abfiltriert. Diese erste Filtratfraktion enthält noch mehr als 2% Eisen und 0,5% ZnO, der Rest ist überwiegend CaSO₄. Es wird weiter erhitzt bis es zu einer erneuten Ausfällung kommt. Diese Ausfällung enthält mehr als 10% Phosphor, angegeben als P₂O₅, und über 45% Kalzium, angegeben als CaO.

### Beispiel 2

In einem Druckgefäß werden 100l Wasser vorgelegt. Darin werden 0,5kg Klärschlamm eingetragen. In das System wird Kohlensäure eingebracht, bis ein Druck von 15bar erreicht ist. Es wird vorsichtig auf einen Druck von 4bar reduziert. Der Schlamm wird durch absetzen lassen separiert, und die Flüssigkeit wird unter Druck abgenommen. Dann wird der Druck entspannt und das verbleibende CO₂ unter Vakuum dem Filtrat entzogen. Die dabei entstehende Ausfällung wird abgetrennt und getrocknet. In einer ersten Extraktion können 16% des im Schlamm enthaltenen Phosphors, angegeben als P₂O₅, gewonnen werden. Bei mehrmaliger Extraktion werden über 30% des im Schlamm enthaltenen Phosphors gewonnen.

### Beispiel 3

Es wird eine 10%ige wässrige Klärschlammsuspension hergestellt. Die Suspension wird bei 12°C für 10 min mit CO₂ versetzt. Dabei wird ein Druck von 30bar aufgebaut. Anschließend wird der Druck vorsichtig entspannt und der klare Überstand abgetrennt. Diesem Filtrat wird dann unter Vakuum das CO₂ entzogen, so dass es zur Fällung der gelösten Stoffe kommt. Der erhaltene Filterkuchen wird getrocknet und kann als P-haltiger Dünger verwendet werden.

## Patentansprüche

1. Verfahren zur Gewinnung von Phosphat aus Klärschlammprodukten durch Extraktion, bei dem man
eine Suspension des Klärschlammproduktes in Wasser, Alkohol, Wasser/Alkohol-Gemisch oder wässriger Lösung herstellt,
gasförmiges Kohlendioxid (CO₂) oder überkritisches Kohlendioxid (scCO₂) als Extraktionsmittel in die Suspension des Klärschlammproduktes einleitet,
ungelöste Feststoffe von dem flüssigen Suspendiermittel abtrennt,
Kohlendioxid aus dem Suspendiermittel entfernt und
in dem Suspendiermittel gelöste Phosphate ausfällt und von dem Suspendiermittel abtrennt.

2. Verfahren nach einem der vorangegangenen Ansprüche, **dadurch gekennzeichnet, dass** das Suspendiermittel zur Herstellung der Suspension des Klärschlammproduktes einen oder mehrere Alkohole in einer Menge von 0,1 bis 50 Gew.-%, vorzugsweise 1 bis 10 Gew.-%, besonders bevorzugt 1 bis 5 Gew.-%, enthält, bezogen auf die Menge an flüssigem Suspendiermittel, wobei der eine Alkohol oder die mehreren Alkohole vorzugsweise ausgewählt ist/sind unter Methanol, Ethanol und Isopropanol.

3. Verfahren nach einem der vorangegangenen Ansprüche, **dadurch gekennzeichnet, dass** das Suspendiermittel zur Herstellung der Suspension des Klärschlammproduktes weiterhin eine oder mehrere Säuren in einer Menge von 0,001 bis 80 Gew.-%, vorzugsweise 0,01 bis 30 Gew.-%, besonders bevorzugt 0,1 bis 10 Gew.-%, enthält, bezogen auf die Menge an flüssigem Suspendiermittel, wobei die eine Säure oder die mehreren Säuren vorzugsweise ausgewählt ist/sind unter organischen Mono- und Dicarbonsäuren und Mineralsäuren, vorzugsweise HCl und H₂SO₄.

4. Verfahren nach einem der vorangegangenen Ansprüche, **dadurch gekennzeichnet, dass** die Suspension das Klärschlammprodukt bei der Herstellung der Suspension in einer Menge von 0,1 bis 60 Gew.-% enthält, bezogen auf die Menge an flüssigem Suspendiermittel.

5. Verfahren nach einem der vorangegangenen Ansprüche, **dadurch gekennzeichnet, dass** man gasförmiges Kohlendioxid (CO₂) als Extraktionsmittel in die Suspension des Klärschlammproduktes einleitet.

6. Verfahren nach einem der vorangegangenen Ansprüche, **dadurch gekennzeichnet, dass** man das Kohlendioxid als Extraktionsmittel bei einem Druck von 0,1 bis 200 bar, vorzugsweise von 1 bis 100 bar, besonders bevorzugt von 5 bis 10 bar in die wässrige Suspension des Klärschlammproduktes einleitet.

7. Verfahren nach einem der vorangegangenen Ansprüche, **dadurch gekennzeichnet, dass** die Suspension beim Einleiten des das Kohlendioxids als Extraktionsmittel eine Temperatur im Bereich von -20 bis +200 °C, vorzugsweise von 0 bis +100 °C, besonders bevorzugt von 20 bis +50 °C aufweist.

8. Verfahren nach einem der vorangegangenen Ansprüche, **dadurch gekennzeichnet, dass** das Abtrennen ungelöster Feststoffe von dem flüssigen Suspendiermittel mittels Filtration, Sedimentation oder Zentrifugation durchgeführt wird.

9. Verfahren nach einem der vorangegangenen Ansprüche, **dadurch gekennzeichnet, dass** das Entfernen von Kohlendioxid aus dem Suspendiermittel durch Reduzierung des Drucks und/oder Temperaturerhöhung und/oder Fällung, wie beispielsweise mit Ca(OH)₂, und/oder Ultraschallbehandlung und/oder Mikrowellenbehandlung und/oder mechanische Gasextraktionshilfsmittel erfolgt.

10. Verfahren nach einem der vorangegangenen Ansprüche, **dadurch gekennzeichnet, dass** das Entfernen von Kohlendioxid aus dem Suspendiermittel und das Ausfällen und Abtrennen von Wertstoffen fraktioniert in aufeinanderfolgenden Stufen erfolgt.

11. Verfahren nach einem der vorangegangenen Ansprüche, **dadurch gekennzeichnet, dass** zum Ausfällen von Phophaten aus dem Suspendiermittel zusätzlich Fällmittel zugegeben werden, vorzugsweise Alkali- oder Erdalkaliverbindungen, bevorzugt Alkali- oder Erdalkalihydroxide, besonders bevorzugt Calciumhydroxid.

12. Verfahren nach einem der vorangegangenen Ansprüche, **dadurch gekennzeichnet, dass** zusätzlich Calcium gewonnen wird.

## Claims

1. A process for recovering phosphate from sewage sludge products by extraction, in which
a suspension of the sewage sludge product is produced in water, alcohol, water-alcohol mixture or an aqueous solution,
gaseous carbon dioxide (CO₂) or supercritical carbon dioxide (scCO₂) is introduced as an extraction agent into the suspension of the sewage sludge product,
undissolved solids are separated from the liquid suspension agent,
carbon dioxide is removed from the suspension agent, and
phosphates dissolved in the suspension agent are precipitated and separated from the suspension agent.

2. A process as set forth in one of the preceding claims **characterised in that** the suspension agent for production of the suspension of the sewage sludge product contains one or more alcohols in an amount of between 0.1 and 50% by weight, preferably between 1 and 10% by weight, particularly preferably between 1 and 5% by weight, with respect to the amount of liquid suspension agent, wherein the one alcohol or the plurality of alcohols is/are preferably selected from methanol, ethanol and isopropanol.

3. A process as set forth in one of the preceding claims **characterised in that** the suspension agent for production of the suspension of the sewage sludge product further contains one or more acids in an amount of between 0.001 and 80% by weight, preferably between 0.01 and 30% by weight, particularly preferably between 0.1 and 10% by weight, with respect to the amount of liquid suspension agent, wherein the one acid or the plurality of acids is/are preferably selected from organic mono- and dicarboxylic acids and mineral acids, preferably HCl and H₂SO₄.

4. A process as set forth in one of the preceding claims **characterised in that** the suspension contains the sewage sludge product in the production of the suspension in an amount of between 0.1 and 60% by weight with respect to the amount of liquid suspension agent.

5. A process as set forth in one of the preceding claims **characterised in that** gaseous carbon dioxide (CO₂) is introduced as an extraction agent into the suspension of the sewage sludge product.

6. A process as set forth in one of the preceding claims **characterised in that** the carbon dioxide is introduced as the extraction agent into the aqueous suspension of the sewage sludge product at a pressure of between 0.1 and 200 bars, preferably between 1 and 100 bars, particularly preferably between 5 and 10 bars.

7. A process as set forth in one of the preceding claims **characterised in that** the suspension upon introduction of the carbon dioxide as the extraction agent is at a temperature in the range of between -20 and +200°C, preferably between 0 and +100°C, particularly preferably between 20 and +50°C.

8. A process as set forth in one of the preceding claims **characterised in that** separation of undissolved solids from the liquid suspension agent is effected by means of filtration, sedimentation or centrifuging.

9. A process as set forth in one of the preceding claims **characterised in that** the removal of carbon dioxide from the suspension agent is effected by reducing the pressure and/or an increase in temperature and/or precipitation like for example with Ca(OH)₂ and/or ultrasonic treatment and/or microwave treatment and/or mechanical gas extraction aids.

10. A process as set forth in one of the preceding claims **characterised in that** the removal of carbon dioxide from the suspension agent and the precipitation and separation of reusable materials is effected fractionatedly in successive stages.

11. A process as set forth in one of the preceding claims **characterised in that** for precipitation of phosphates from the suspension agent precipitation agents are additionally added, preferably alkali metal or alkaline earth compounds, preferably alkali metal or alkaline earth hydroxides, particularly preferably calcium hydroxide.

12. A process as set forth in one of the preceding claims **characterised in that** calcium is additionally recovered.

## Revendications

1. Procédé pour récupérer des phosphates à partir de produits des boues d'épuration par extraction, dans lequel :
on prépare une suspension du produit des boues d'épuration dans de l'eau, dans un alcool, dans un mélange eau/alcool ou dans une solution aqueuse,
on introduit, dans la suspension du produit des boues d'épuration, du dioxyde de carbone gazeux (CO₂) ou du dioxyde de carbone supercritique (scCO₂) en tant qu'agent d'extraction,
on sépare du milieu en suspension liquide les solides non dissous,
on élimine le dioxyde de carbone du milieu en suspension, et
on fait précipiter les phosphates dissous dans le milieu en suspension et on les sépare du milieu en suspension.

2. Procédé selon l'une des revendications précédentes, **caractérisé en ce que** le milieu en suspension destiné à la préparation de la suspension du produit des boues d'épuration contient un ou plusieurs alcools en une quantité de 0,1 à 50 % en poids, de préférence de 1 à 10 % en poids, d'une manière particulièrement préférée de 1 à 5 % en poids, par rapport au poids du milieu en suspension liquide, l'alcool ou les plusieurs alcools étant de préférence choisis parmi le méthanol, l'éthanol et l'isopropanol.

3. Procédé selon l'une des revendications précédentes, **caractérisé en ce que** le milieu en suspension destiné à la préparation de la suspension du produit des boues d'épuration contient en outre un ou plusieurs acides en une quantité de 0,001 à 80 % en poids, de préférence de 0,01 à 30 % en poids, d'une manière particulièrement préférée de 0,1 à 10 % en poids, par rapport au poids du milieu en suspension liquide, l'acide ou les plusieurs acides étant de préférence choisis parmi les acides mono- et dicarboxyliques organiques et les acides minéraux, de préférence HCl et H₂SO₄.

4. Procédé selon l'une des revendications précédentes, caractérisé la suspension contient le produit des boues d'épuration, lors de la préparation de la suspension, en une quantité de 0,1 à 60 % en poids, par rapport au poids du milieu en suspension liquide.

5. Procédé selon l'une des revendications précédentes, **caractérisé en ce qu'**on introduit dans la suspension du produit des boues d'épuration du dioxyde de carbone gazeux (CO₂) en tant qu'agent d'extraction.

6. Procédé selon l'une des revendications précédentes, **caractérisé en ce qu'**on introduit dans la suspension aqueuse du produit des boues d'épuration le dioxyde de carbone en tant qu'agent d'extraction sous une pression de 0,1 à 200 bar, de préférence de 1 à 100 bar, d'une manière particulièrement préférée de 5 à 10 bar.

7. Procédé selon l'une des revendications précédentes, **caractérisé en ce que** la suspension, lors de l'introduction du dioxyde de carbone en tant qu'agent d'extraction, présente une température comprise dans la plage de -20 à +200°C, de préférence de 0 à +100°C, d'une manière particulièrement préférée de 20 à +50°C.

8. Procédé selon l'une des revendications précédentes, **caractérisé en ce que** la séparation des solides non dissous dans le milieu en suspension liquide est mise en oeuvre par filtration, sédimentation ou centrifugation.

9. Procédé selon l'une des revendications précédentes, **caractérisé en ce que** l'élimination du dioxyde de carbone à partir du milieu en suspension est réalisée par réduction de la pression et/ou élévation de la température et/ou précipitation, par exemple avec du Ca(OH)₂ et/ou par un traitement aux ultrasons et/ou par un traitement par des micro-ondes, et/ou par des moyens d'extraction mécanique des gaz.

10. Procédé selon l'une des revendications précédentes, **caractérisé en ce que** l'élimination du dioxyde de carbone à partir du milieu en suspension et la précipitation et la séparation de matières de valeur ont lieu d'une manière fractionnée en étapes successives.

11. Procédé selon l'une des revendications précédentes, **caractérisé en ce que**, pour isoler par précipitation les phosphates du milieu en suspension, on ajoute en outre des agents de précipitation, de préférence des composés de métaux alcalins ou alcalino-terreux, de préférence des hydroxydes de métaux alcalins ou alcalino-terreux, d'une manière particulièrement préférée de l'hydroxyde de calcium.

12. Procédé selon l'une des revendications précédentes, **caractérisé en ce qu'**on récupère en outre du calcium.
